# EUROPÄISCHE PATENTANMELDUNG

(11) **EP 2 110 288 A1**
(43) Veröffentlichungstag der Anmeldung: **21.10.2009**
(21) Anmeldenummer: 08007285.3
(22) Anmeldetag: 14.04.2008
(51) Int. Cl.: B60S 3/00

(54) **Vorrichtung zur Reinigung von Kraftfahrzeugen**

(71) Anmelder: Jurant, Marian, 52146 Würselen (DE)
(72) Erfinder: Jurant, Marian, 52146 Würselen (DE)
(74) Vertreter: Naeven, Ralf

(57) **Zusammenfassung**

Es wird eine Vorrichtung zur Reinigung von Kraftfahrzeugen vorgestellt, die sich durch eine transportable Waschbühne (1) mit Mitteln zum Auffangen des Schmutzwassers kennzeichnet. Die innerhalb kurzer Zeit ab- und aufbaubare Vorrichtung erlaubt einen örtlich flexiblen Einsatz. Die Reinigungsflüssigkeit, in der Regel Wasser, wird mittels eines ebenfalls transportablen Waschwasserbehälters (18) zur Verfügung gestellt. Über Reinigungseinrichtungen, wie Schlammfang und Filter, kann die Reinigungsflüssigkeit im Kreislauf geführt werden.

## Beschreibung

Die vorliegende Erfindung betrifft eine Vorrichtung zur Reinigung von Kraftfahrzeugen.

Es ist allgemein bekannt, Kraftfahrzeuge, insbesondere Personenkraftfahrzeuge, in Waschanlagen zu waschen oder waschen zu lassen. Bei den Waschanlagen handelt es sich um fest installierte Einrichtungen, in denen das Fahrzeug entweder automatisch, z.B. mittels rotierender Bürsten und aufgespritztem Wasser und ggf. mit Reinigungsmitteln, bearbeitet wird, oder in denen die PKW-Besitzer selbst eine Handwäsche vornehmen können (Selbstbedienungswaschplatz). Derart fest installierte Anlagen sind für einen wirtschaftlichen Betrieb auf regelmäßigen und hohen Kundenbesuch angewiesen. Die Betriebskosten werden dabei in der Regel ganz wesentlich von Grundstück und den notwendigen Aufbauten bestimmt. Bei hoher Nachfrage kann es zu langen Wartezeiten kommen. Eine Kapazitätserhöhung durch den Anbau einer weiteren Waschstraße oder eines weiteren festen Waschplatzes würde wiederum zu hohen und dauerhaften Kosten führen, die den Betrieb unwirtschaftlich machen können.

Vielerorts ist die Autowäsche auf öffentlichen Straßen und Plätzen und auf Privatgrundstücken verboten oder zumindest Restriktionen ausgesetzt. Der Weg zur automatischen Waschanlage oder zum Selbstbedienungswaschplatz ist aber oftmals weit und damit zeitaufwändig, da in ländlichen, dünn besiedelten Gebieten die feste Installation derartiger Anlagen nicht wirtschaftlich ist.

Der Erfindung liegt die Aufgabe zugrunde, eine Vorrichtung zur Reinigung von Kraftfahrzeugen zur Verfügung zu stellen, die flexibel und mit geringem Aufwand errichtet und wieder entfernt werden kann, um damit auf Bedarfsänderungen schnell reagieren zu können.

Diese Aufgabe wird bei einer Vorrichtung der eingangs genannten Art durch eine transportable Waschbühne mit Mitteln zum Auffangen des Schmutzwassers gelöst.

Transportable Waschbühnen können nach Belieben aufgebaut und abgebaut werden. Auf diese Weise kann auf starke Nachfrageschwankungen schnell reagiert werden Insbesondere die Selbstbedienungswaschanlagen können so entlastet werden. An bevorzugten Waschtagen wie samstags können derartige Anlagen auch wirtschaftlich in dünn besiedelten Gebieten eingesetzt werden. Zudem ist es möglich, die transportablen Waschbühnen bei besonderen Veranstaltungen einzusetzen, z.B. bei Oldtimer-Treffen.

Das Auffangen des Schmutzwassers verhindert ein Verschmutzen des Bodens. Das Schmutzwasser müsste ansonsten entfernt werden oder darf zum Schutz der Umwelt, z.B. von Oberflächenwasser, gar nicht erst auf den Boden gelangen.

Die erfindungsgemäße Vorrichtung kann auch so ausgebildet sein, dass die Waschbühne aus transportablen und lösbar miteinander verbundenen Einzelteilen besteht. Somit ist ein Abtransport mittels eines Lastkraftwagens möglich.

Alternativ kann die erfindungsgemäße Vorrichtung auch so ausgebildet sein, dass die gesamte Waschbühne auf eine transportable Größe zusammenklappbar ist oder lösbare Einzelteile der Waschbühne auf eine transportable Größe zusammenklappbar sind.

Erfindungsgemäß kann die Vorrichtung auch so ausgebildet sein, dass die Waschbühne einen Aufnahmerahmen und mindestens ein einen Schmutzwasserauslass aufweisendes und im Aufnahmerahmen angeordnetes Schmutzwasserauffangbecken umfasst.

Der Schmutzwasserauslass wird dann betätigt, wenn eine Möglichkeit des legalen Ablassens des Schmutzwassers besteht. Der Aufnahmerahmen selbst besteht vorteilhaft wiederum aus einzelnen lösbar aneinander fixierbaren Rahmenelementen.

Die erfindungsgemäße Vorrichtung kann auch so ausgebildet sein, dass mindestens ein am Aufnahmerahmen fixiertes Schmutzwasserleitelement vorgesehen ist. Das Schmutzwasserleitelement kann das von dem zu reinigenden Fahrzeug abtropfende Schmutzwasser unmittelbar einem Schmutzwasserauslass oder dem Schmutzwasserauffangbecken zuleiten. Dabei können das (die) Schmutzwasserleitelement(e) derart am Aufnahmerahmen befestigt sein, dass das Schmutzwasser nicht oder nur in unbedenklichem Umfang zwischen Aufnahmerahmen und Schmutzwasserleitelement aus der Waschbühne austreten kann.

Dabei kann es vorteilhaft sein, die erfindungsgemäße Vorrichtung so auszubilden, dass das mindestens eine Schmutzwasserleitelement zusammenrollbar ist. Das Schmutzwasserleitelement kann hierfür aus einem flexiblen textilen Material oder aus einem flexiblen Kunststoff bestehen und beispielsweise eine Plane sein. Eine solche Plane kann zwischen Aufnahmerahmen und Schmutzwasserauffangbecken aufgespannt sein. Die Aufrollbarkeit kann einen einfachen Abtransport des Schmutzwasserleitelements gewährleisten.

Die erfindungsgemäße Vorrichtung kann auch so ausgebildet sein, dass das Schmutzwasserleitelement am Schmutzwasserauffangbecken fixiert ist. Sofern das Schmutzwasserleitelement aufrollbar ist, kann es beim Abbau der Waschbühne vom Aufnahmerahmen abgelöst, aufgerollt und in das Schmutzwasserauffangbecken hineingelegt werden. Beides kann zusammen abtransportiert werden. Beim Aufbau kann die Plane bzw. können mehrere Planen aus dem Schmutzwasserauffangbecken heraus ausgerollt und am Aufnahmerahmen befestigt werden. Alternativ kann das mindestens eine Schmutzwasserleitelement auch aus einem unnachgiebigen Material, z.B. Metall bestehen. Dabei kann es klappbar gestaltet sein

Vorteilhaft kann die erfindungsgemäße Vorrichtung auch so ausgebildet sein, dass die Waschbühne eine flüssigkeitsdurchlässige, ein zu waschendes Kraftfahrzeug tragende Tragebene aufweist. Die Tragebene befindet sich oberhalb des Schmutzwasserauffangbeckens und kann am Aufnahmerahmen, z.B. an einer Auflagekante, aufgelegt sein.

Dabei kann die Tragebene aus mehreren Gitterrostelementen gebildet sein. Die Aufteilung auf eine Mehrzahl von Gitterrostelementen erleichtert die Abbaubarkeit und vor allem die Transportierbarkeit der erfindungsgemäßen Vorrichtung.

Die erfindungsgemäße Vorrichtung kann auch so ausgebildet sein, dass zumindest der Aufnahmerahmen durch in der Höhe verstellbare Fußelemente getragen ist. So kann die Vorrichtung auch einem nicht ganz ebenen und/oder horizontalen Gelände angepasst und mit im Wesentlichen waagerechter Tragebene aufgestellt werden.

Die erfindungsgemäße Vorrichtung kann auch so ausgebildet sein, dass der mindestens eine Schmutzwasserauslass zur Schmutzwasserübertragung mit einem außerhalb der Waschbühne angeordneten Schmutzwasserauffangbehälter verbunden ist. Mit dem Schmutzwasserauffangbehälter kann das Schmutzwasser gesondert abtransportiert und fachgerecht entsorgt werden. Je nach Aufstellmöglichkeit kann der Schmutzwasserauffangbehälter unterhalb des Niveaus des Schmutzwasserauffangbeckens angeordnet werden, so dass das Schmutzwasser dem Gefälle folgend in den Schmutzwasserauffangbehälter gelangt. Anderenfalls ist eine Pumpe vorzusehen.

Es kann auch vorteilhaft sein, die erfindungsgemäße Vorrichtung so auszubilden, dass ein Waschflüssigkeitsbehälter vorgesehen ist, wobei der Waschflüssigkeitsbehälter mit einem einen Waschflüssigkeitsauslass aufweisenden Waschelement zur Waschflüssigkeitsübertragung verbunden ist. Das Waschelement kann z.B. das vordere Ende eines Schlauches sein oder auch der Kopf eines Dampfstrahlgerätes. Die Waschflüssigkeit kann reines Wasser, z.B. Trinkwasser, sein oder mit einem Reinigungsmittel versetztes Wasser oder eine sonstige Reinigungsflüssigkeit. Damit stellt die erfindungsgemäße Vorrichtung nicht nur eine Möglichkeit zum Auffangen des Schmutzwassers zur Verfügung sondern gleichzeitig die Waschflüssigkeit.

Die erfindungsgemäße Vorrichtung kann auch so ausgebildet sein, dass zwischen dem mindestens einen Schmutzwasserauslass der Waschbühne und dem Waschflüssigkeitsbehälter eine flüssigkeitsübertragende Verbindung besteht, wobei Mittel zur Reinigung des Schmutzwassers vorgesehen sind. Die Mittel zur Reinigung des Schmutzwassers können Filter und/oder Schlammabscheider sein. Die flüssigkeitsübertragende Verbindung kann über den Schmutzwasserauffangbehälter bestehen, in dem die Mittel zur Reinigung des Schmutzwassers oder ein Teil dieser Reinigungsmittel angeordnet sein können.

Die erfindungsgemäße Vorrichtung kann auch so ausgebildet sein, dass der Schmutzwasserauffangbehälter und der Waschflüssigkeitsbehälter in einem Gesamtbehälter zusammengefasst sind. Dies bedeutet, dass der Waschflüssigkeitsbehälter gleichzeitig der Schmutzwasserauffangbehälter ist. Dies kann dann erreicht werden, wenn zwischen dem Einlauf dieses Gesamtbehälters und seinem Auslauf hinreichende Reinigungsmittel, z.B. Filter, vorgesehen sind.

Weiterhin kann die erfindungsgemäße Vorrichtung so ausgebildet sein, dass der Waschflüssigkeitsbehälter einen Filter zur Reinigung der Waschflüssigkeit aufweist.

Schließlich kann es vorteilhaft sein, die erfindungsgemäße Vorrichtung so auszubilden, dass in Fließrichtung vor dem Waschflüssigkeitsbehälter ein Filterbehälter mit einem Filter zur Reinigung der Waschflüssigkeit vorgesehen ist.

Bevorzugte Ausführungsbeispiele der erfindungsgemäßen Vorrichtung sind im Folgenden anhand von Figuren erläutert.

### Es zeigen schematisch

Fig. 1: eine erfindungsgemäße Vorrichtung in einer Schrägaufsicht,
Fig. 2: die Vorrichtung nach Fig. 1 ohne Traggitter in anderer Schrägaufsicht, und
Fig. 3: eine weitere Vorrichtung mit geänderter Geometrie der Waschbühne.

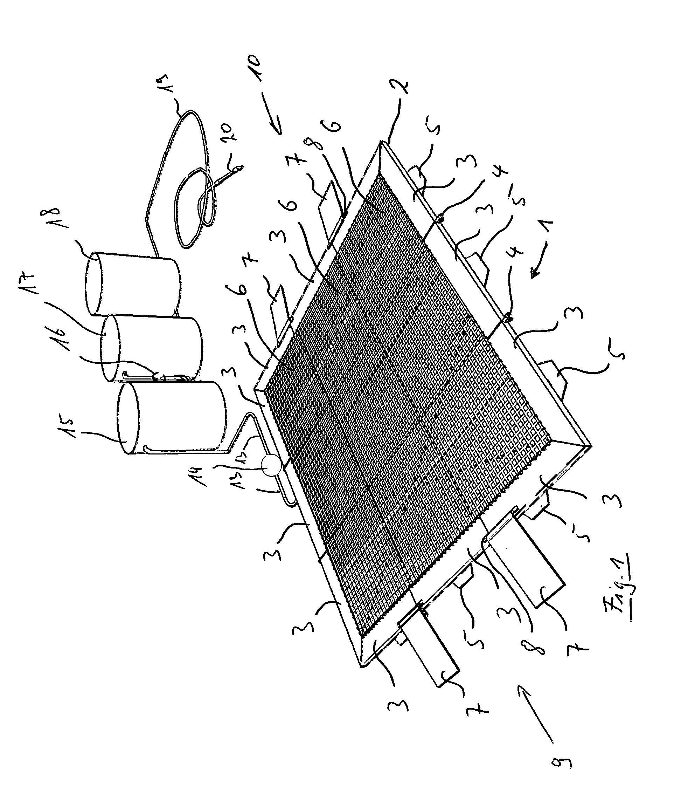

Fig. 1 zeigt eine Waschanlage mit einer Waschbühne 1. Die Waschbühne 1 umfasst einen Aufnahmerahmen 2, der im vorliegenden Ausführungsbeispiel aus neun lösbar aneinander fixierten Rahmenelementen 3 zusammengesetzt ist. Die Fixierung erfolgt beispielsweise mittels hier nur angedeuteten Bolzen 4, die durch hier nicht gezeigte ringförmige Halteelemente gesteckt sind, wobei die ringförmigen Halteelemente jedes Rahmenelements 3 zwischen die ringförmigen Halteelemente des benachbarten Rahmenelements 3 greifen. Der Aufnahmerahmen ruht auf Fußelementen 5 mit Schraubgewinde, die jeweils in einem der Rahmenelemente 3 eingeschraubt sind. Die Fußelemente 5 können innerhalb eines durch die Gewindelänge vorgegebenen Rahmens stufenlos in beliebigen Einschraubtiefen fixiert werden. Damit sind die Fußelemente 5 in Ihrer Höhe verstellbar, so dass die Waschbühne 1 an unebenes Gelände angepasst werden kann. Die Fußelemente 5 können auf festem Untergrund, z.B. Asphalt, aber auch auf natürlichem Untergrund, wie z.B. Rasen oder Wiese, aufgebaut werden. Für weiche Untergründe können die Fußelemente auch in besonderer Weise, z.B. mit Stiften zum Einführen in den Untergrund, ausgebildet sein, um die gewünschte Standfestigkeit zu gewährleisten.

Der Aufnahmerahmen weist an seiner Innenseite eine hier nicht dargestellte umlaufende Stufe oder Auflagekante auf, auf der Tragegitter 6 in Form von Gitterrosten aufgelegt werden. Die Tragegitter 6 bilden dann eine Trageebene, auf der die Kraftfahrzeuge zur Reinigung abgestellt werden. Zum Auffahren und Abfahren auf die bzw. von der Waschbühne 1 sind Rampen 7 vorgesehen, die z.B. in dafür vorgesehene Schlitze 8 des entsprechenden Rahmenelements 3 eingehakt sind. Die Tragegitter 6 können von einer Seite z.B. der Auffahrseite 9 der Waschbühne 1 bis zur Abfahrtseite 10 durchgehend sein. Bei geeigneter, in Fig. 1 nicht dargestellter Unterstützung innerhalb des Aufnahmerahmens 2 kann die Tragebene aber auch durch eine größere Anzahl von Tragegittern 6, dann mit jeweils kleineren Ausdehnungen, gebildet sein.

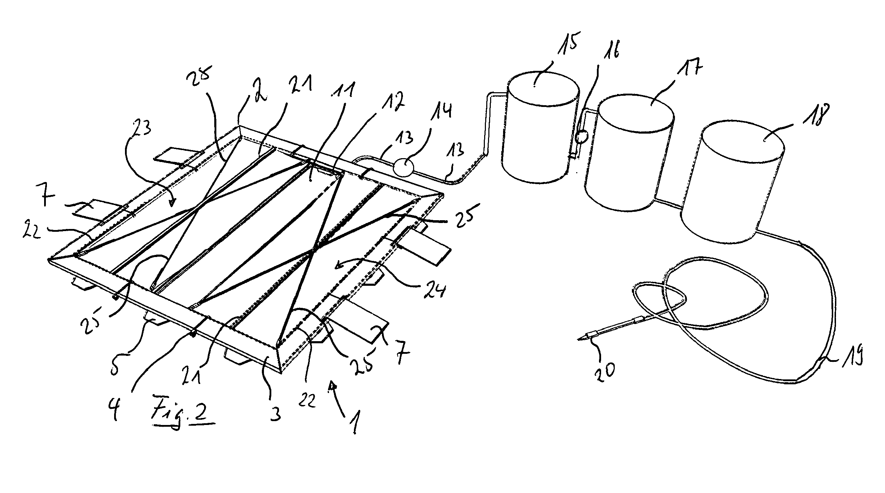

Das vom nicht dargestellten Fahrzeug abtropfende Schmutzwasser gelangt durch die Tragegitter 6 hindurch in ein in Fig. 2 sichtbares Schmutzwasserauffangbecken 11. Dieses weist einen Schmutzwasserauslass 12 auf, der in einen Abwasserschlauch 13 mündet. Durch eine am Abwasserschlauch 13 angeordnete Pumpe 14 wird das Schmutzwasser in einen Schmutzwasserauffangbehälter 15 gepumpt. In diesem Schmutzwasserauffangbehälter 15 können sich Schmutzteile am Boden absetzen. Der Schmutzwasserauffangbehälter 15 dient somit als Schlammfang. Von dort gelangt das vom Schlamm befreite Schmutzwasser z.B. über eine weitere Pumpe 16 in einen Filterbehälter 17, in dem das Schmutzwasser mittels hier nicht dargestellter, üblicher Wasserfilter soweit gefiltert wird, dass es wieder zur Reinigung einsetzbar ist. Vom Filterbehälter 17 gelangt das gereinigte Wasser dann in den Wasservorratsbehälter 18. Zwischen dem Filterbehälter 17 und dem Wasservorratsbehälter 18 kann ein hier nicht dargestelltes Rückschlagventil vorgesehen sein, um den Rückfluss vom Wasservorratsbehälter 18 zum Filterbehälter 17 zu verhindern. Alternativ kann auch hier mit einer Pumpe gearbeitet werden. Sofern das Gelände es erlaubt, können die Behälter 15, 17 und 18 auch so aufgestellt werden, dass der natürliche Wasserdruck und/oder das Gefälle ausgenutzt werden können und hierdurch einzelne Pumpen oder Ventile entbehrlich sind.

Vom Wasservorratsbehälter 18 gelangt das Wasser dann über einen Waschschlauch 19 zu einer Spritzdüse 20, die dann zur Fahrzeugreinigung eingesetzt wird. Dabei kann der Druck des im Wasservorratsbehälter 18 vorhandenen Wassers ausgenutzt werden. Sofern ein Stromanschluss verfügbar ist, kann auch ein elektrisch betriebenes Reinigungsgerät, z.B. ein hier nicht dargestellter Dampfstrahlreiniger, eingesetzt werden, der mit dem Wasser des Wasservorratsbehälters 18 gespeist wird.

In den Behältern 15, 17 oder 18 können selbstverständlich Belüftungsmöglichkeiten vorgesehen werden, um den Betrieb, insbesondere ein Befüllen und Entleeren, zu ermöglichen.

Die beschriebene Ausführungsform der Waschanlage sieht keinen Ölabscheider vor, da die Fahrzeugwäsche wie eine übliche Handwäsche als reine Oberflächenwäsche ohne Motorwäsche und ohne Felgenreinigung mit aggressiven Reinigungsmitteln durchgeführt werden kann. Alternativ kann natürlich eine Station zur Ölabscheidung vorgesehen werden. Des Weiteren ist es auch möglich, das Waschwasser mit einem Reinigungsmittel zu versetzen.

Fig. 2 zeigt die Waschanlage gemäß Fig. 1 in anderer Schrägaufsicht und ohne die Tragegitter 6. Die einzelnen Teile sind mit denselben Bezugszeichen versehen wie in Fig. 1, weshalb diesbezüglich auf die dortige Beschreibung verwiesen wird. Innerhalb des Aufnahmerahmens 2 sind T-Träger 21 angeordnet, von denen hier zwei dargestellt sind. Die T-Träger 21 sind z.B ohne direkten Kontakt zum Untergrund im Aufnahmerahmen 2 fixiert und unterstützen die in Fig. 2 nicht dargestellten Tragegitter 6 (Fig. 1). In hier andeutungsweise dargestellten Ösen 22 des Aufnahmerahmens 2 sind nicht zu erkennende Fixierungselemente zweier Planen 23 und 24 eingehakt. Die Planen 24, 24 laufen unter den T-Trägern hindurch und leiten das vom Fahrzeug abtropfende Schmutzwasser in das Schmutzwasserauffangbecken 11. Alternativ können die Planen 23 und 24 auch oberhalb der T-Träger 21, d.h. von den T-Trägern 21 und den aufliegenden Tragegittern 6 eingeklemmt, angeordnet sein. Dann ist darauf zu achten, dass die Tragegitter 6 an diesen Klemmstellen den Wasserdurchtritt erlauben. Dabei wäre es vorteilhaft, die T-Träger 21 so anzuordnen, dass in den Planen 23 und 24 ein leichtes Gefälle vom Aufnahmerahmen2 zum Schmutzwasserauffangbecken 11 gegeben ist. Hierdurch können sich auch leichte Gefälle innerhalb der durch die Tragegitter 6 gegebenen Trageebene ergeben, deren Ebenheit dann ggf. nicht vollkommen ist.

Die Planen 23 und 24 sind vorteilhaft am Schmutzwasserauffangbecken 11 z.B. durch Schweißen fixiert. Beim Abbau der Waschanlage brauchen die Planen 23 und 24 dann lediglich vom Aufnahmerahmen 2 gelöst, aufgerollt und in das Schmutzwasserauffangbecken 11 gelegt zu werden und können dann mit diesem zusammen transportiert und gelagert werden.

Fig. 2 zeigt des Weiteren Spannseile 25, die kreuzweise angeordnet sind und den Aufnahmerahmen 2 gegen ein Verziehen, das beispielsweise beim Abbremsen der aufgefahrenen oder beim Anfahren der gereinigten Fahrzeuge auftreten kann, stabilisiert. Die Spannseile werden mit hier nicht im Einzelnen dargestellten Spannschrauben gespannt.

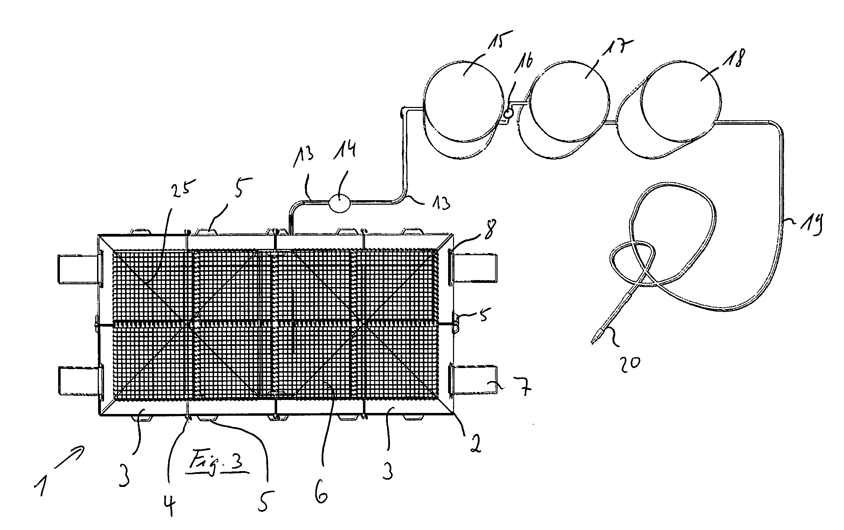

Fig. 3 zeigt in Aufsicht eine zu Fig. 1 und 2 entsprechende Waschanlage, wobei dort lediglich eine rechteckige Form der Waschbühne 1 für längere Fahrzeuge gegeben ist. Wegen der übrigen Bestandteile mit gleichen Bezugszeichen wird auf die vorherige Beschreibung verwiesen. Selbstverständliche sind auch weitere vom Rechteck abweichende Formen möglich.

Die hier beschriebenen Waschanlagen können ohne weiteres in etwa einer Stunde, abhängig von der jeweiligen Bodensituation, aufgebaut und in Arbeitsstellung gebracht werden. Mit etwa gleichen Zeiten kann beim Abbau gerechnet werden.

### Bezugszeichenliste

- 1: Waschbühne
- 2: Aufnahmerahmen
- 3: Rahmenelement
- 4: Bolzen
- 5: Fußelement
- 6: Tragegitter
- 7: Rampe
- 8: Schlitz
- 9: Auffahrseite
- 10: Abfahrseite
- 11: Schmutzwasserauffangbecken
- 12: Schmutzwasserauslass
- 13: Abwasserschlauch
- 14: Pumpe
- 15: Schmutzwasserauffangbehälter
- 16: Pumpe
- 17: Filterbehälter
- 18: Wasservorratsbehälter
- 19: Wasserschlauch
- 20: Spritzdüse
- 21: T-Träger
- 22: Ösen
- 23: Plane
- 24: Plane
- 25: Spannseil

## Patentansprüche

1. Vorrichtung zur Reinigung von Kraftfahrzeugen, **gekennzeichnet durch** eine transportable Waschbühne (1) mit Mitteln zum Auffangen des Schmutzwassers.

2. Vorrichtung nach Anspruch 1, **dadurch gekennzeichnet, dass** die Waschbühne (1) aus transportablen und lösbar miteinander verbundenen Einzelteilen besteht.

3. Vorrichtung nach Anspruch 1, **dadurch gekennzeichnet, dass** die gesamte Waschbühne (1) oder lösbare Einzelteile der Waschbühne (1) auf eine transportable Größe zusammenklappbar ist (sind).

4. Vorrichtung nach einem der vorherigen Ansprüche, **dadurch gekennzeichnet, dass** die Waschbühne (1) einen Aufnahmerahmen (2) und mindestens ein einen Schmutzwasserauslass (12) aufweisendes und im Aufnahmerahmen (2) angeordnetes Schmutzwasserauffangbecken (11) umfasst.

5. Vorrichtung nach einem der vorherigen Ansprüche, **dadurch gekennzeichnet, dass** mindestens ein am Aufnahmerahmen (2) fixiertes Schmutzwasserleitelement (23, 24) vorgesehen ist.

6. Vorrichtung nach Anspruch 5, **dadurch gekennzeichnet, dass** das mindestens eine Schmutzwasserleitelement (23, 24) zusammenrollbar ist.

7. Vorrichtung nach Anspruch 5 oder 6, **dadurch gekennzeichnet, dass** das Schmutzwasserleitelement (23, 24) am Schmutzwasserauffangbecken (11) fixiert ist.

8. Vorrichtung nach einem der vorherigen Ansprüche, **dadurch gekennzeichnet, dass** die Waschbühne (1) eine flüssigkeitsdurchlässige, ein zu waschendes Kraftfahrzeug tragende Tragebene aufweist.

9. Vorrichtung nach einem der vorherigen Ansprüche, **dadurch gekennzeichnet, dass** zumindest der Aufnahmerahmen (3) durch in der Höhe verstellbare Fußelemente (5) getragen ist.

10. Vorrichtung nach einem der vorherigen Ansprüche, **dadurch gekennzeichnet, dass** der mindestens eine Schmutzwasserauslass (12) zur Schmutzwasserübertragung mit einem außerhalb der Waschbühne (1) angeordneten Schmutzwasserauffangbehälter (15) verbunden ist.

11. Vorrichtung nach einem der vorherigen Ansprüche, **dadurch gekennzeichnet, dass** ein Waschflüssigkeitsbehälter (18) vorgesehen ist, wobei der Waschflüssigkeitsbehälter (18) mit einem einen Waschflüssigkeitsauslass aufweisenden Waschelement (20) zur Waschflüssigkeitsübertragung verbunden ist.

12. Vorrichtung nach Anspruch 11, **dadurch gekennzeichnet, dass** zwischen dem mindestens einen Schmutzwasserauslass (12) der Waschbühne (1) und dem Waschflüssigkeitsbehälter (18) eine flüssigkeitsübertragende Verbindung besteht, wobei Mittel zur Reinigung des Schmutzwassers vorgesehen sind.

13. Vorrichtung nach einem der vorhergehenden Ansprüche, **dadurch gekennzeichnet, dass** der Schmutzwasserauffangbehälter (15) und der Waschflüssigkeitsbehälter (18) in einem Gesamtbehälter zusammengefasst sind.

14. Vorrichtung nach einem der vorhergehenden Ansprüche, **dadurch gekennzeichnet, dass** der Waschflüssigkeitsbehälter (18) einen Filter zur Reinigung der Waschflüssigkeit aufweist.

15. Vorrichtung nach einem der vorhergehenden Ansprüche, **dadurch gekennzeichnet, dass** in Fließrichtung vor dem Waschflüssigkeitsbehälter (18) ein Filterbehälter (17) mit einem Filter zur Reinigung der Waschflüssigkeit vorgesehen ist.
